# EUROPÄISCHE PATENTSCHRIFT

(11) **EP 3 587 038 B1**
(45) Veröffentlichungstag und Bekanntmachung des Hinweises auf die Patenterteilung: **24.02.2021**
(21) Anmeldenummer: 19181278.3
(22) Anmeldetag: 19.06.2019
(51) Int. Cl.: B24B 23/02, B25F 5/00

(54) **GETRIEBEKOPF UND HANDWERKZEUGMASCHINE**
GEAR HEAD AND HANDHELD MACHINE TOOL
TÊTE MOTRICE ET MACHINE-OUTIL MANUELLE

(30) Priorität: 26.06.2018 DE 102018115303
(43) Veröffentlichungstag der Anmeldung: 01.01.2020
(73) Patentinhaber: C. & E. Fein GmbH, 73529 Schwäbisch Gmünd-Bargau (DE)
(72) Erfinder: Dürnegger, Wolfgang, 73529 Schwäbisch Gmünd-Bargau (DE)
(74) Vertreter: Wallinger, Michael

(56) Entgegenhaltungen:
- EP-A1- 1 961 525
- EP-A2- 0 072 610
- DE-A1- 19 510 291
- DE-A1-102010 043 186
- DE-A1-102011 005 809
- US-A1- 2002 066 632

## Beschreibung

Die Erfindung betrifft einen Getriebekopf für eine Handwerkzeugmaschine zum Bearbeiten von Werkstücken gemäß Anspruch 1. Außerdem betrifft die Erfindung eine Handwerkzeugmaschine mit einem Antrieb sowie mit einem erfindungsgemäßen Getriebekopf.

Bei Handwerkzeugmaschinen, beispielsweise bei Winkelschleifern, tritt die Problematik auf, dass sich nach dem Abschalten der Handwerkzeugmaschine ein mit der Werkzeugwelle des Getriebekopfs verbundenes Werkzeug weiterdreht und nur sehr langsam durch den eine vergleichsweise hohe Massenträgheit aufweisenden Antrieb abgebremst wird. Dies ist jedoch mit einem nicht unerheblichen Verletzungsrisiko für den Nutzer einer derartigen Handwerkzeugmaschine verbunden, da sich dieser auch bei abgeschaltetem Antrieb an dem sich noch drehenden Werkzeug schwer verletzen kann.

Zudem besteht das Problem, dass es bei einem Verkanten des Werkzeugs häufig zu einem so genannten "kick back" der Handwerkzeugmaschine kommt, bei dem sich die Handwerkzeugmaschine mit dem sich drehenden Werkzeug unkontrolliert auf den Nutzer zubewegt, was ebenfalls zu schwerwiegenden Verletzungen des Nutzers führen kann. Zwar werden bei Handwerkzeugmaschinen, bei denen der Antrieb als "Hold-to-run" ausgeführt ist, die also nur dann laufen, wenn der entsprechende Schalter vom Nutzer gehalten wird, Bremsvorrichtungen verwendet, um das Werkzeug der Handwerkzeugmaschine aktiv abzubremsen, da jedoch stets auch der Antrieb der Handwerkzeugmaschine mit abgebremst werden muss, wird das Werkzeug durch die Bremsvorrichtung nur unzureichend abgebremst, so dass die Gefahr schwerer Verletzungen des Nutzers weiterbesteht.

Beispielsweise aus der EP 2 632 652 B1 ist ein Getriebekopf bekannt, bei dem eine mechanische Bremsvorrichtung vorgesehen ist, die als Montageeinheit in den Getriebekopf eingesetzt werden kann, um die Werkzeugwelle abzubremsen, wenn der Antrieb ausgeschaltet wird. Hierbei hat es sich jedoch als äußerst nachteilig erwiesen, dass bei der aus der EP 2 632 652 B1 bekannten Handwerkzeugmaschine die Werkzeugwelle mit dem Antrieb stets kraftschlüssig verbunden ist, so dass die Bremsvorrichtung letztlich sowohl das mit der Werkzeugwelle verbundene Werkzeug aber auch den Antrieb selbst abbremsen muss. Daher muss durch die Bremsvorrichtung eine vergleichsweise große Energie abgebaut werden. Dies führt jedoch dazu, dass die Bremsvorrichtung sehr groß ausgelegt werden muss. Auch muss der Bremsbelag der Bremsvorrichtung häufig gewechselt werden, was sich nachteilig auf den Wartungsaufwand der mit dem Getriebekopf verbundenen Handwerkzeugmaschine auswirkt.

Aus der EP 1 961 525 A1 ist eine Handwerkzeugmaschine bekannt, bei der nach einem Auslösen einer Bremsvorrichtung der Antrieb von der Werkzeugwelle entkoppelt wird.

Die EP 0 072 610 A2 zeigt eine Handwerkzeugmaschine, bei der zwischen dem Antrieb und der Werkzeugwelle eine mechanische Kupplung vorgesehen ist, die eine Schraubenfeder umfasst, mit der es gleichzeitig möglich ist, die Werkzeugwelle nach dem Auslösen der Kupplung abzubremsen.

Der vorliegenden Erfindung liegt daher die Aufgabe zugrunde, die vorgenannten Nachteile zu reduzieren und einen verbesserten Getriebekopf für eine Handwerkzeugmaschine bereitzustellen. Außerdem ist es Aufgabe der Erfindung, eine verbesserte Handwerkzeugmaschine bereitzustellen.

Die den Getriebekopf betreffende Aufgabe wird gemäß der Erfindung bei einem Getriebekopf der eingangs genannten Art dadurch gelöst, dass die Schaltvorrichtung mindestens ein radial verstellbares Schaltmittel umfasst, das in einer an einem Freilaufinnenring ausgebildeten Steuerkurve aufgenommen ist, die durch einen die erste Schaltstellung definierenden ersten Sitz und einen die zweite Schaltstellung definierenden zweiten Sitz begrenzt ist.

Durch die Schaltvorrichtung lässt sich damit eine selektive Koppelung der Werkzeugwelle mit dem Abtrieb erreichen. In der ersten Schaltstellung der Schaltvorrichtung ist die Werkzeugwelle mit dem Abtrieb kraftübertragend verbunden, während in der zweiten Schaltstellung die Werkzeugwelle von diesem entkoppelt ist. Gleichzeitig wird in der ersten Schaltstellung die Bremsvorrichtung in die Lösestellung überführt, so dass sich die Werkzeugwelle mit dem Abtrieb bewegen und frei drehen kann. In der zweiten Schaltstellung ist hingegen nicht nur die Werkzeugwelle von dem Abtrieb entkoppelt, sondern es wird auch die Bremsvorrichtung aus der Lösestellung in die Bremsstellung überführt bzw. verstellt, so dass die von dem Abtrieb entkoppelte Werkzeugwelle und das damit verbundene Werkzeug - beispielsweise eine Schleifscheibe - abgebremst werden, während der Abtrieb nicht durch die Bremsvorrichtung abgebremst werden muss. Im Rahmen der Erfindung ist es hierbei vorgesehen, dass die Verstellung der Bremsvorrichtung zwischen der Lösestellung und der Bremsstellung simultan mit der Verstellung der Schaltvorrichtung zwischen der ersten Schaltstellung und der zweiten Schaltstellung oder zeitlich nachgelagert erfolgt. Durch die Abkoppelung der Werkzeugwelle und des damit verbundenen Werkzeugs von dem Abtrieb wird erreicht, dass lediglich Komponenten mit einer vergleichsweise geringen Rotationsenergie abgebremst werden müssen, während der Rest des Antriebsstranges, der einer sehr große Rotationsenergie aufweist, ungebremst auslaufen kann. Dabei steckt in der gebremsten Masse zwischen 20 % und 30 % der Rotationsenergie des Gesamtsystems.

Als besonders vorteilhaft hat es sich auch erwiesen, wenn die Schaltvorrichtung derartig mit dem Abtrieb wechselwirkt, dass die Schaltvorrichtung durch einen von dem Abtrieb induzierten mechanischen Schaltimpuls zwischen der ersten Schaltstellung und der zweiten Schaltstellung verstellbar ist. Somit kann eine mechanische Lösung verwendet werden und letztlich auf die Implementierung und Verwendung einer elektronischen Schaltung verzichtet werden, was sich positiv auf den Herstellungsaufwand auswirkt. Insbesondere ist es hierbei vorgesehen, dass es beim Einschalten des Antriebs einer mit dem erfindungsgemäßen Getriebekopf ausgerüsteten Handwerkzeugmaschine und dem damit verbundenen Anlaufen des Abtriebes, zu einer Mitnahme eines Teils der Schaltvorrichtung kommt, wodurch die in der zweiten Schaltstellung befindliche Schaltvorrichtung durch den dadurch induzierten mechanischen Schaltimpuls aus der zweiten Schaltstellung in die erste Schaltstellung überführt wird, wodurch die Werkzeugwelle mit dem Abtrieb gekoppelt wird und die Bremsvorrichtung gelöst wird, sodass nun die Werkzeugwelle mit dem Abtrieb kraftübertragend verbunden ist. Beim Ausschalten der Handwerkzeugmaschine wird dann das mit der Werkzeugwelle verbundene Werkzeug stärker als der Abtrieb abgebremst, sodass hier unterschiedliche negative Beschleunigungen zwischen der Werkzeugwelle und dem mit dem Antrieb gekoppelten Abtrieb vorliegen, die wiederum zu einem Schaltimpuls führen, der bewirkt, dass die Schaltvorrichtung wieder aus der ersten Schaltstellung in die zweite Schaltstellung überführt wird, wodurch eine Entkoppelung der Werkzeugwelle von dem Abtrieb erfolgt und die Bremsvorrichtung aus der Lösestellung in die Bremsstellung überführt wird.

Bewährt hat es sich auch, dass die Schaltvorrichtung mindestens ein radial verstellbares Schaltmittel umfasst, das in einer an einem Freilaufinnenring ausgebildeten Steuerkurve aufgenommen ist, die durch einen die erste Schaltstellung definierenden ersten Sitz und einen die zweite Schaltstellung definierenden zweiten Sitz begrenzt ist. Durch die Verwendung des mindestens einen Schaltmittels, das in der an dem Freilaufinnenring ausgebildet Steuerkurve geführt ist, lässt sich die Schaltung der Schaltvorrichtung besonders einfach realisieren. Hierbei hat es sich im Rahmen der Erfindung besonders bewährt, wenn die Steuerkurve als eine radiale Steuerkurve gebildet ist, mit der sich das mindestens eine Schaltmittel radial verstellen lässt. In diesem Zusammenhang hat es sich außerdem als vorteilhaft erwiesen, wenn das mindestens eine Schaltmittel als ein Zylinder gebildet ist, da dieser besonders einfach in der Steuerkurve des Freilaufinnenrings geführt werden kann. Der Freilaufinnenring ist dabei gegenüber dem Gehäuse drehbar gelagert.

Um dabei die Koppelung zwischen dem Abtrieb und der Schaltvorrichtung in der ersten Schaltstellung zu verbessern, hat es sich als günstig gezeigt, wenn das in dem ersten Sitz befindliche Schaltmittel in der ersten Schaltstellung kraftschlüssig mit dem Abtrieb verbunden ist. Wenn sich das Schaltmittel in dem ersten Sitz befindet, sich die Schaltvorrichtung also in der ersten Schaltstellung befindet, wird ein Kraftschluss zwischen dem Abtrieb und dem Schaltmittel und damit auch mit dem Freilaufinnenring gebildet, also letztlich das Schaltmittel zwischen dem ersten Sitz und dem Abtrieb geklemmt. Hierbei kann der erste Sitz besonders bevorzugt eine Klemmschräge aufweisen, wodurch mittels der Position des Schaltmittels auf der Klemmschräge die Stärke des Kraftschlusses beeinflusst werden kann. Befindet sich hingegen das Schaltmittel in dem zweiten Sitz der Steuerkurve, so ist der Kraftschluss zwischen dem Abtrieb und dem Schaltmittel gelöst, so dass eine Relativdrehung zwischen dem Abtrieb und der Schaltvorrichtung möglich ist.

Als besonders vorteilhaft hat es sich auch erwiesen, wenn die Schaltvorrichtung einen Schaltring umfasst, der den Freilaufinnenring umgreift und der außenumfangsseitig mindestens einen eine Rückhaltefunktion für das mindestens eine Schaltmittel bereitstellenden radialen Durchbruch aufweist, durch den das mindestens eine Schaltmittel in der ersten Schaltstellung radial durchtritt. Der Schaltring übt also eine Rückhaltefunktion auf das Schaltmittel aus, was insbesondere die Montage erleichtert. Darüber hinaus kann der Schaltring insbesondere mit seiner Stirnseite auch in Kontakt mit dem Abtrieb gebracht werden, sodass sich der Schaltimpuls einfach von dem Abtrieb auf die Schaltvorrichtung übertragen lässt. Da die Durchbrüche, die in dem Schaltring ausgebildet sind, derartig dimensioniert sind, dass die Schaltmittel zwar durch diese durchtreten können, gleichzeitig aber auch von diesen zurückgehalten werden, ist der Schaltring lediglich in dem zwischen dem ersten Sitz und dem zweiten Sitz der Steuerkurve definierten Winkelbereich relativ zu dem Freilaufinnenring verdrehbar. Bei dieser Relativverdrehung folgt das mindestens eine in dem korrespondierenden Durchbruch aufgenommene Schaltmittel der Bewegung des Schaltrings und wird dabei entlang der Steuerkurve zwischen dem ersten Sitz und dem zweiten Sitz verstellt.

Die Übertragung des Schaltimpulses von dem Abtrieb auf die Schaltvorrichtung wird auch dann verbessert, wenn dem Schaltring ein radial nach innen weisender Überdeckungsabschnitt zugeordnet ist, der besonders bevorzugt als ein Ringbund gebildet ist. Hierdurch lässt sich die Kontaktfläche zwischen dem Schaltring und dem Abtrieb vergrößern, wodurch der Schaltvorgang verbessert wird.

Als günstig hat es sich außerdem auch gezeigt, wenn die Bremsvorrichtung eine drehfest mit der Werkzeugwelle verbundene und relativ zu der Werkzeugwelle axial zwischen der Lösestellung und der Bremsstellung verstellbare Bremshülse umfasst. Hierdurch lässt sich die Bremsvorrichtung auf besonders einfache Art und Weise realisieren.

In diesem Zusammenhang hat es sich zudem bewährt, wenn ein Rückstellelement vorgesehen ist, das in der Lösestellung der Bremsvorrichtung eine Rückstellkraft auf die Bremshülse ausübt. Durch die auf die Bremshülse in der Lösestellung wirkende Rückstellkraft wird erreicht, dass bei der Verstellung des Schaltelements aus der ersten Schaltstellung in die zweite Schaltstellung auch die Bremshülse und damit die ganze Bremsvorrichtung sicher aus der Lösestellung in die Bremsstellung überführt wird, was sich positiv auf die Betriebssicherheit des erfindungsgemäßen Getriebekopfs auswirkt. Im Rahmen der Erfindung hat es sich hierbei auch als vorteilhaft gezeigt, wenn das Rückstellelement als ein Federpaket gebildet ist, das mindestens eine Wellenfeder umfasst.

Als günstig hat es sich auch erwiesen, wenn die Schaltvorrichtung einen Nockenmechanismus aufweist zur Verstellung der Bremsvorrichtung zwischen der Lösestellung und der Bremsstellung. Hierdurch wird eine einfache mechanische Lösung bereitgestellt, die zudem störunanfällig ist, was sich positiv auf den Wartungsaufwand des erfindungsgemäßen Getriebekopfs auswirkt. In diesem Zusammenhang hat es sich auch als besonders vorteilhaft gezeigt, wenn der Nockenmechanismus mindestens einen an dem Freilaufinnenring ausgebildeten axialen Steuernocken umfasst zur Wechselwirkung mit einem an der Bremshülse ausgebildeten Gegennocken. Hierdurch lässt sich auf einfache Art und Weise eine radiale Verstellung des Schaltelements und des Freilaufinnenrings in eine axiale Verstellung der Bremshülse umwandeln. Der Steuernocken kann dabei bevorzugt innenumfangsseitig an dem Freilaufinnenring ausgebildet sein.

Bewährt hat es sich zudem, wenn die Bremsvorrichtung eine dem Gehäuse zugeordnete Bremsfläche und eine der Bremshülse zugeordnete Gegenfläche zur Wechselwirkung mit der Bremsfläche aufweist. Somit kommt beim Verstellen der Bremshülse aus der Lösestellung in die Bremsstellung die der Bremshülse zugeordnete Gegenfläche in Kontakt mit der Bremsfläche, die dem Gehäuse zugeordnet ist, wodurch die Abbremsung der Werkzeugwelle erfolgt. In diesem Zusammenhang hat es sich weiterhin auch als vorteilhaft gezeigt, wenn die Bremsfläche auf einem Bremsring ausgebildet ist, der drehfest mit dem Gehäuse verbunden ist, wodurch sich die Kontaktfläche zwischen der Bremsfläche und der Gegenfläche vergrößern lässt, was sich positiv auf das Abbremsverhalten auswirkt. Im Rahmen der Erfindung ist es hierbei insbesondere auch vorgesehen, dass der Bremsring einstückig mit dem Gehäuse gebildet ist, wodurch der Montageaufwand weiter reduziert wird. Somit wird die Bremsvorrichtung letztlich erst bei der Gesamtmontage gebildet, wenn also das Gehäuse mit den übrigen Teilen der Bremsvorrichtung verbunden wird.

Die Anpassbarkeit des erfindungsgemäßen Getriebekopfs an unterschiedliche Handwerkzeugmaschinen lässt sich dadurch verbessern, dass eine eine axiale Führung für die Bremshülse breitstellende Distanzhülse vorgesehen ist, die drehfest und axial unverschiebbar mit der Werkzeugwelle verbunden ist. Zudem kann zwischen der Bremshülse und der Distanzhülse das Rückstellelement aufgenommen sein, wodurch ein besonders kompakter Getriebekopf gebildet wird.

Als günstig hat es sich auch erwiesen, wenn der Abtrieb ein einen Kegeltrieb und ein Kegelrad aufweisendes Getriebe umfasst. Hierdurch lässt sich - auf einfache Art und Weise - beispielsweise bei einem Getriebekopf für einen Winkelschleifer die Richtung des Abtriebs verändern. Insbesondere kann hierbei die Steuervorrichtung mit dem Kegelrad des Getriebes wechselwirken, wobei dann das Kegelrad vorzugsweise topfförmig gestaltet ist und einen Boden sowie einen Axialabschnitt aufweist mit dessen Innenwandung das mindestens eine Schaltelement in der ersten Schaltstellung einen Kraftschluss bildet. Durch die Verwendung des Getriebes erhöht sich der eingangs beschriebene Vorteil, hinsichtlich der abzubremsenden Rotationsenergie, da sich der Antrieb bzw. der Elektromotor aufgrund des Übersetzungsverhältnisses des Getriebes, das vorzugsweise 3,73 beträgt, schneller dreht als ein mit der Werkzeugwelle verbundenes Werkzeug.

Als günstig hat es sich auch erwiesen, wenn das Verhältnis des Massenträgheitsmoments der gebremsten Masse zu dem Massenträgheitsmoment der ungebremsten Masse größer ist als 0,8:1, besonders bevorzugt größer ist als 1:1 und kleiner als 10:1 ist. In das Massenträgheitsmoment der gebremsten Masse fließt dabei explizit auch das Moment des an der Werkzeugschnittstelle befestigten Werkzeugs ein. Die Bremsvorrichtung kann auf das Massenträgheitsmoment angepasst werden.

Die die Handwerkzeugmaschine betreffende Aufgabe wird gemäß der Erfindung durch eine Handwerkzeugmaschine gelöst mit einem Antrieb sowie mit einem Getriebekopf nach einem der Ansprüche 1 bis 15. Hierdurch wird insbesondere eine Handwerkzeugmaschine bereitgestellt, deren Werkzeugwelle schnell abgebremst werden kann und bei der der Wartungsaufwand reduziert ist.

Im Folgenden wird die Erfindung an einem in den Zeichnungen dargestellten Ausführungsbeispiel näher erläutert; es zeigen:
- Fig. 1: eine teilgeschnittene Handwerkzeugmaschine,
- Fig. 2: eine Schnittansicht durch einen Getriebekopf der Handwerkzeugmaschine,
- Fig. 3: eine perspektivische Ansicht auf einen Freilaufinnenring einer Schaltvorrichtung des Getriebekopfs,
- Fig. 4: eine perspektivische Ansicht auf einen Schaltring der Schaltvorrichtung,
- Fig. 5: eine perspektivische Ansicht auf eine Bremshülse einer Bremsvorrichtung,
- Fig. 6: eine Schnittansicht eines Kegelrads eines Abtriebs des Getriebekopfs,
- Fig. 7: einen Querschnitt durch die Schaltvorrichtung des Getriebekopfs in einer ersten Schaltstellung,
- Fig. 8: einen Längsschnitt durch die Schaltvorrichtung in der ersten Schaltstellung,
- Fig. 9: einen Querschnitt durch die Schaltvorrichtung des Getriebekopfs in einer zweiten Schaltstellung,
- Fig. 10: einen Längsschnitt durch die Schaltvorrichtung in der zweiten Schaltstellung, und
- Fig. 11: eine Explosionsdarstellung des Getriebekopfs.

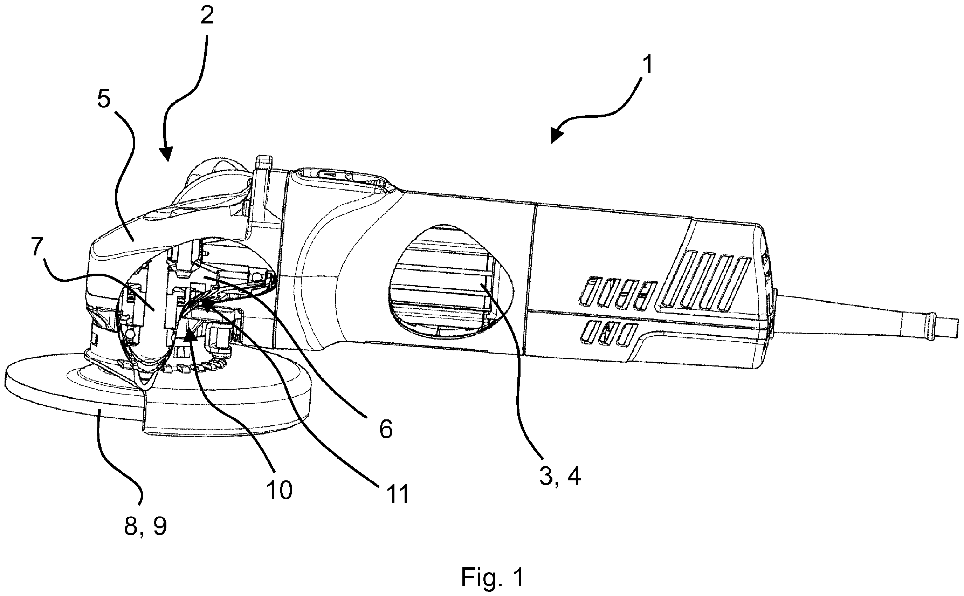

Figur 1 zeigt in einer teilgeschnittenen Ansicht eine Handwerkzeugmaschine 1, die einen Getriebekopf 2 sowie einen Antrieb 3 aufweist, der als ein Elektromotor 4 gebildet ist. Der Getriebekopf 2 weist dabei ein Gehäuse 5 auf, in dem ein mit dem Antrieb 3 gekoppelter Abtrieb 6 aufgenommen ist. Ebenfalls ist in dem Gehäuse 5 eine Werkzeugwelle 7 angeordnet, an die ein Werkzeug 8 angekoppelt ist, das in dem gezeigten Ausführungsbeispiel als eine Schleifscheibe 9 gebildet ist. Ebenfalls aus der Figur 1 ist eine Bremsvorrichtung 10 erkennbar, die auf die Werkzeugwelle 7 wirkt und zwischen einer Bremsstellung und einer Lösestellung verstellt werden kann. Weiterhin ist eine Schaltvorrichtung 11 vorgesehen, die zwischen einer ersten Schaltstellung, in der die Werkzeugwelle 7 mit dem Abtrieb 6 kraftübertragend verbunden ist und in der sich die Bremsvorrichtung 10 in der Lösestellung befindet, und einer zweiten Schaltstellung verstellbar ist, in der die Werkzeugwelle 7 mit dem Abtrieb 6 entkoppelt ist und in der die Bremsvorrichtung 10 in die Bremsstellung überführt wird.

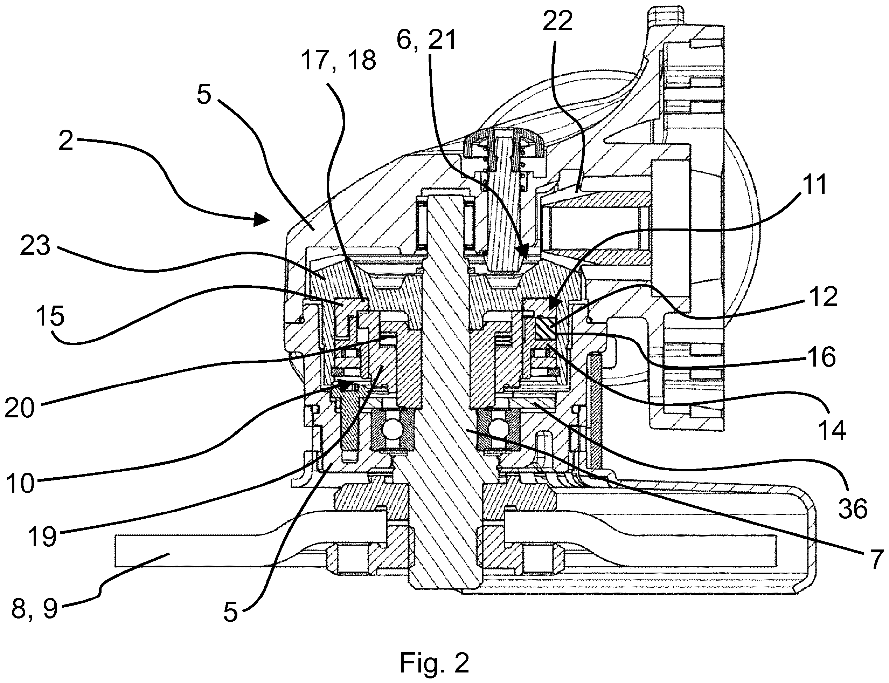

Figur 2 zeigt in einer geschnittenen Ansicht den Getriebekopf 2. Hierbei ist insbesondere zu erkennen, dass die Schaltvorrichtung 11 ein radial verstellbares Schaltmittel 12 umfasst, das in einer Steuerkurve 13 aufgenommen ist, die an einem Freilaufinnenring 14 ausgebildet ist. Der Freilaufinnenring 14 wird von einem Schaltring 15 umgriffen, der außenumfangsseitig radiale Durchbrüche 16 aufweist, durch die das Schaltmittel 12 in der ersten Schaltstellung radial nach außen treten kann. Der Schaltring 15 weist dabei einen radial nach innen weisenden Überdeckungsabschnitt 17 auf, der als ein Ringbund 18 gebildet ist. In dem gezeigten Ausführungsbeispiel umfasst die Bremsvorrichtung 10 eine Bremshülse 19, die durch ein Rückstellelement 20 derart beaufschlagt ist, dass in der Lösestellung der Bremsvorrichtung 10 eine in Bremsrichtung wirkende Rückstellkraft auf die Bremshülse 19 wirkt. Die Bremshülse 19 ist dabei drehfest mit der Werkzeugwelle 7 verbunden und relativ zu dieser axial zwischen der Lösestellung und der Bremsstellung verschiebbar. Der Abtrieb 6 weist ein Getriebe 21 auf, das aus einem Kegeltrieb 22 und einem Kegelrad 23 gebildet ist.

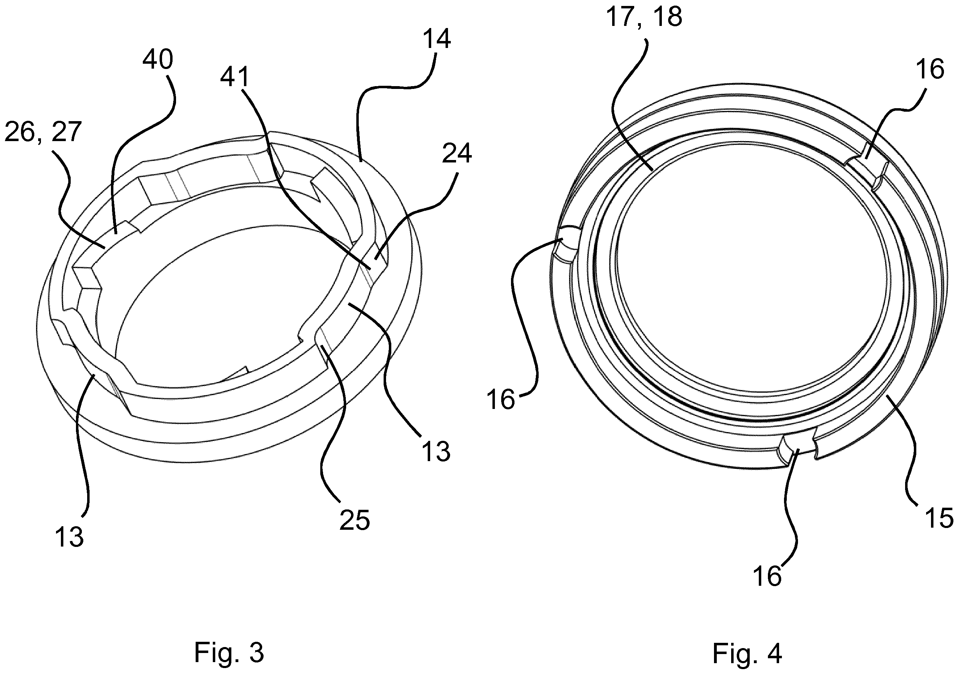

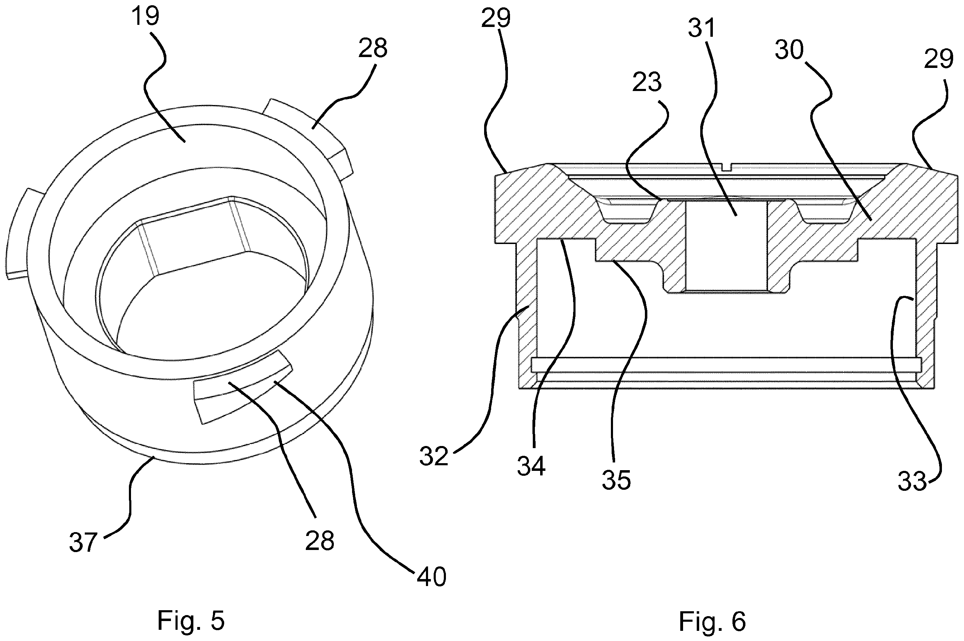

Figur 3 zeigt in einer perspektivischen Ansicht den Freilaufinnenring 14 mit den darin ausgebildeten Steuerkurven 13, in denen jeweils eines der in dem gezeigten Ausführungsbeispiel dreifach vorgesehenen Schaltmittel 12 aufgenommen ist. Die Steuerkurven 13 sind jeweils durch einen ersten Sitz 24, der die erste Schaltstellung definiert, und durch einen zweiten Sitz 25 begrenzt, durch den die zweite Schaltstellung definiert wird. Der erste Sitz 24 unterscheidet sich dabei von dem zweiten Sitz 25 dadurch, dass das in dem ersten Sitz 24 befindliche Schaltmittel 12 radial weiter nach außen verstellt ist als ein in dem zweiten Sitz 25 befindliches Schaltmittel 12. Zudem weist der erste Sitz 24 eine Klemmschräge 41 auf, durch die die Stärke des Kraftschlusses beeinflusst wird. Innenumfangsseitig weist der Freilaufinnenring 14 axiale Steuernocken 26 auf, die Teil eines Nockenmechanismus 27 sind, mit dem die Bremsvorrichtung 10 zwischen der Lösestellung und der Bremsstellung verstellt werden kann, wie mit Bezug auf die Figuren 5 bzw. 7 bis 10 näher erläutert wird.

Der Figur 4 ist der Schaltring 15 zu entnehmen, der gleichmäßig über den Außenumfang verteilt drei Durchbrüche 16 aufweist, durch die die drei als Zylinder ausgebildeten Schaltmittel 12, die in den Steuerkurven 13 des Freilaufinnenrings 14 geführt sind, radial nach außen hindurchtreten können. Die Durchbrüche 16 sind dabei so gestaltet, dass durch diese stets eine Rückhaltefunktion auf die Schaltmittel 12 ausgeübt wird. Weiterhin ist der Überdeckungsabschnitt 17 zu erkennen, der in dem gezeigten Ausführungsbeispiel als der Ringbund 18 ausgebildet ist und die Montage vereinfacht, aber auch die Übertragung des Schaltimpulses von dem Abtrieb 6 auf die Schaltvorrichtung 11 begünstigt.

Figur 5 zeigt ebenfalls in einer perspektivischen Ansicht die Bremshülse 19 der Bremsvorrichtung 10. Diese weist außenumfangsseitig Gegennocken 28 auf, die mit den Steuernocken 26 des Freilaufinnenrings 14 wechselwirken, um die Bremshülse 19 axial gegenüber der Werkzeugwelle 7 zu verstellen, wenn die Schaltvorrichtung 11 aus der ersten Schaltstellung in die zweite Schaltstellung überführt wird.

Figur 6 zeigt in einer geschnittenen Ansicht das Kegelrad 23 des Getriebes 21, das Teil des Abtriebs 6 ist. Das Kegelrad 23 weist dabei eine topfförmige Gestalt mit einem Boden 30 und einem Axialabschnitt 32 auf und umfasst an der Außenseite des Bodens 30 eine Verzahnung 29, die mit dem Kegeltrieb 22 des Getriebes 21 im Verzahnungseingriff steht. Zentral im Boden 30 des Kegelrads 23 ist eine Durchführung 31 ausgebildet, in der die Werkzeugwelle 7 drehbar gelagert ist. Weiterhin weist der Axialabschnitt 32 des Kegelrads 23, das in der Figur 6 dargestellt ist, eine Innenwandung 33 auf, gegen die - zur Bildung eines Kraftschlusses - in der ersten Schaltstellung das Schaltmittel 12 radial verstellt wird. Auf der Innenseite des Bodens 30 sind zueinander konzentrisch angeordnet eine ringförmige Fläche 34, von der die dem Freilaufinnenring 14 abweisende Stirnseite des Schaltrings 15 leicht beabstandet ist, und eine ringförmige Kontaktfläche 35 ausgebildet ist, gegen die die Bremshülse 19 in der Lösestellung der Bremsvorrichtung 10 axial verstellt ist.

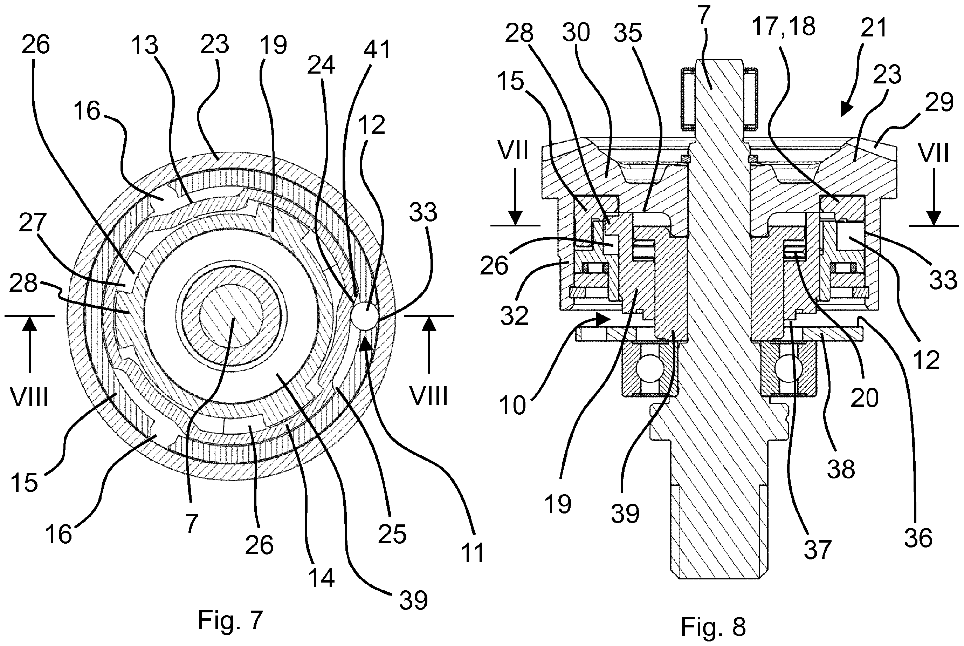

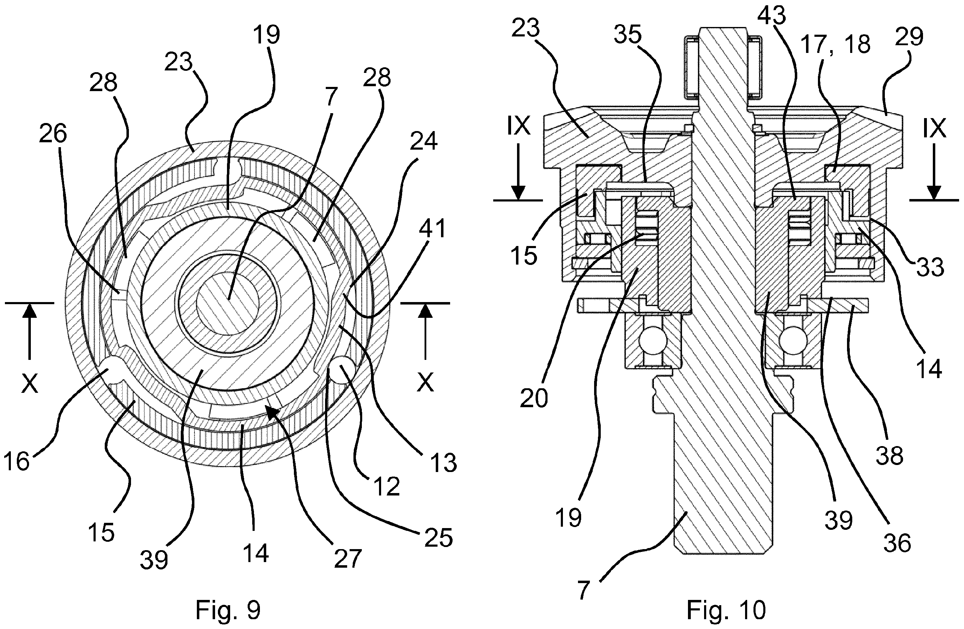

Die Funktion der Schaltvorrichtung 11 und der Bremsvorrichtung 10 wird nachstehend anhand der Figuren 7 bis 10 näher erläutert, wobei die Figuren 7 und 8 die Schaltvorrichtung 11 in der ersten Schaltstellung bei gelöster Bremsvorrichtung 10 zeigen, während sich in den Figuren 9 und 10 die Schaltvorrichtung 11 in der zweiten Schaltstellung und die Bremsvorrichtung 10 in der Bremsstellung befinden.

Figur 7 und Figur 8 zeigen einen Querschnitt und einen Längsschnitt durch einen Teil des Getriebekopfs 2, dessen Schaltvorrichtung 11 sich dabei in der ersten Schaltstellung befindet, in der also die Werkzeugwelle 7 über einen Kraftschluss drehfest mit dem Kegelrad 23 des Abtriebs 6 verbunden ist und in der sich die Bremsvorrichtung 10 in der geöffneten Stellung befindet, axial also gegen die Kraft des Rückstellelements 20 von dem Bremsring 38 weg verstellt ist. Wie dabei der Figur 7 zu entnehmen ist, befindet sich hierbei das dreifach vorgesehene Schaltmittel 12, von dem aus Übersichtsgründen lediglich eines dargestellt ist, in dem ersten Sitz 24, der die erste Schaltstellung definiert. Hierbei ist das Schaltmittel 12 durch die Klemmschräge 41 radial nach außen gegen die Innenwandung 33 des Axialabschnitts 32 des Kegelrads 23 verstellt und bildet dort mit der Innenwandung 23 einen Kraftschluss. Hierdurch ist die Schaltvorrichtung 11 zusammen mit der gelösten Bremsvorrichtung 10 und damit auch mit der Werkzeugwelle 7 drehfest mit dem Kegelrad 23 des Getriebes 21 verbunden, wodurch die von dem Antrieb 3 erzeugte Bewegung über das Getriebe 21 auf das mit der Werkzeugwelle 7 verbundene Werkzeug 8 übertragen wird.

Wird nun die Handwerkzeugmaschine 1 durch den Nutzer ausgeschaltet, so kommt es im Bereich der Schleifscheibe 9 zu einer stärkeren Abbremsung als an dem Antrieb 3 der Handwerkzeugmaschine 1. Hierdurch wird der Kraftschluss zwischen den Schaltmitteln 12 und der Innenwandung 33 des an dem Kegelrad 23 ausgebildeten Axialabschnitts 32 gelöst und es kommt zu einer begrenzten Relativdrehung zwischen dem Schaltring 15 und dem Freilaufinnenring 14, wodurch die Schaltmittel 12 auf den jeweiligen Steuerkurven 13 von den ersten Sitzen 24 in die zweiten Sitze 25 verstellt werden. Dies bewirkt eine ebenfalls begrenzte Relativdrehung zwischen dem Freilaufinnenring 14 und der Bremshülse 19, wodurch durch die Schrägflächen 40, die an den den Nockenmechanismus 27 bildenden Steuernocken 26 und den korrespondierenden Gegennocken 28 ausgebildet sind, die über eine Distanzhülse 39 drehfest mit der Werkzeugwelle 7 verbundene Bremshülse 19 mit einer an der Stirnseite der Bremshülse 19 ausgebildeten Gegenfläche 37 axial in Richtung einer an dem Gehäuse 5 ausgebildeten Bremsfläche 36 verstellt wird, die an einem Bremsring 38 ausgebildet ist, der integral mit dem Gehäuse 5 gebildet sein kann. Hierdurch wird - unterstützt durch das auf die Bremshülse 19 wirkende Rückstellelement 20 - die Bremsvorrichtung 10 aus der Lösestellung in die Bremsstellung überführt, wie dies in den Figuren 9 und 10 dargestellt ist. Hierdurch wird die von dem Abtrieb 6 entkoppelte Werkzeugwelle 7 abgebremst, während der Antrieb 3 und der Abtrieb 6 auslaufen können.

Beim Einschalten der Handwerkzeugmaschine 1 wird durch das Anlaufen des Antriebs 3 ein Schaltimpuls von dem Abtrieb 6 auf die Schaltvorrichtung 11 übertragen. Dies erfolgt dabei insbesondere durch die Schaltmittel 12, die sich in der zweiten Schaltstellung zunächst in dem zweiten Sitz 25 auf den jeweiligen Steuerkurven 13 befinden und sich dort an der Innenwandung 33 des Axialabschnitts 32 des Kegelrads 23 frei drehen können. Wird das Kegelrad 23 nun durch das Anschalten des Antriebs 3 schlagartig beschleunigt, so werden die Schaltmittel 12 und damit auch der Schaltring 15 mitgenommen. Es erfolgt dabei eine Relativdrehung zwischen den Schaltmitteln 12 bzw. dem Schaltring 15 und dem Freilaufinnenring 14, wodurch die Schaltmittel 12 jeweils aus dem zweiten Sitz 25 in den ersten Sitz 24 verstellt werden, durch den die erste Schaltstellung definiert ist. Dies führt zu einem Kraftschluss zwischen den Schaltmitteln 12 und dem Abtrieb 6, wodurch die Schaltvorrichtung 11 drehfest mit dem Abtrieb 6 gekoppelt wird. Hierdurch kommt es dann wiederum zu einer begrenzten Relativdrehung zwischen dem Freilaufinnenring 14 und der Bremshülse 19, die Teil der Bremsvorrichtung 10 ist. Diese begrenzte Relativdrehung führt wiederum dazu, dass die Bremshülse 19 durch den Nockenmechanismus 27, der aus den Steuernocken 26, die dem Freilaufinnenring 14 innenumfangsseitig zugeordnet sind, und aus den außenumfangsseitig an der Bremshülse 19 ausgebildeten Gegennocken 28 gebildet ist, axial gegen die Kraft des Rückstellelements 20 aus der Bremsstellung in Richtung des Kegelrads 23 in die Lösestellung verstellt wird. Hierzu sind an den Steuernocken 26 und an den Gegennocken 28 korrespondierende, miteinander wechselwirkende Schrägflächen 40 ausgebildet. Hierbei wird die Gegenfläche 37, die an der Bremshülse 19 ausgebildet ist, von der auf dem Bremsring 38 gebildeten Bremsfläche 36 gelöst, die dem Gehäuse 5 zugeordnet ist. Dabei wird die Bremshülse 19 axial gegen die an dem Boden 30 des Kegelrads 23 ausgebildete Kontaktfläche 35 verstellt und zwischen den Steuernocken 26 und der Kontaktfläche 35 geklemmt. Da die Bremshülse 19 drehfest mit der Werkzeugwelle 7 verbunden ist, kommt es somit letztlich zu einem Kraftschluss zwischen dem Abtrieb 6 und der Werkzeugwelle 7, der ausgehend von dem Kegelrad 23 des Abtriebs 6 durch die Schaltvorrichtung 11 und die Bremsvorrichtung 10 auf die Werkzeugwelle 7 übertragen wird. Somit ist in der ersten Schaltstellung der Schaltvorrichtung 11 die Werkzeugwelle 7 drehfest mit dem Abtrieb 6 verbunden und die Bremsvorrichtung 10 gelöst, bis der Antrieb 3 der Handwerkzeugmaschine 1 erneut abgeschaltet wird.

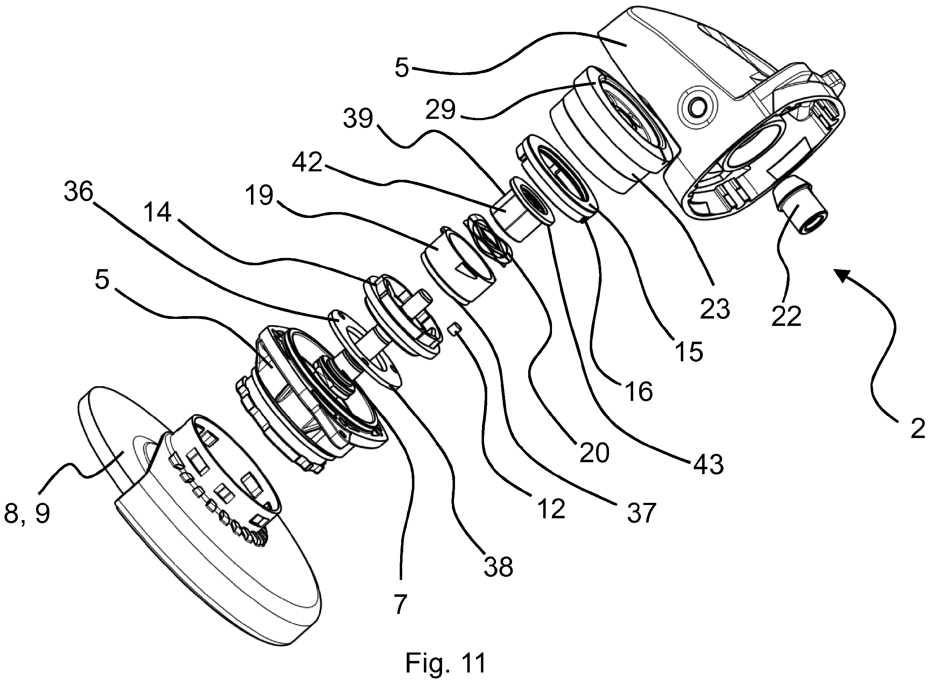

Der Aufbau des Getriebekopfes 2 lässt sich insbesondere auch noch einmal der in der Figur 11 dargestellten Explosionsdarstellung entnehmen. Hierbei wird insbesondere darauf aufmerksam gemacht, dass das Gehäuse 5 zweiteilig ausgeführt ist. In dem dem Werkzeug 8 zugewandten Teil des Gehäuses 5 ist dabei der Bremsring 38 aufgenommen, der auf seiner dem Werkzeug 8 abgewandten Stirnseite die Bremsfläche 36 aufweist, auf die in der zweiten Schaltstellung die korrespondiere Gegenfläche 37 der Bremshülse 19 einwirkt, um das Werkzeug 8 bzw. die Werkzeugwelle 7 abzubremsen. In dem gezeigten Ausführungsbeispiel wird der Bremsring 36 an dem Gehäuse 5 durch eine Schraubverbindung gesichert. Es ist im Rahmen der Erfindung jedoch insbesondere auch vorgesehen, dass der Bremsring 38 als integraler Bestandteil des Gehäuses 5 gebildet wird. Die Distanzhülse 39 ist drehfest und axial unverschiebbar mit der Werkzeugwelle 7 verbunden. Dies wird durch ein Aufpressen der Distanzhülse 39 auf die Werkzeugwelle 7 erreicht. Die Distanzhülse 39 weist Geradflächen 42 auf, die mit der Bremshülse 19 wechselwirken, um beide Bauteile drehfest miteinander zu verbinden. Gleichzeitig ist die Bremshülse 19 jedoch axial verschiebbar an der Distanzhülse 39 und damit letztlich an der Werkzeugwelle 7 gelagert, kann damit also axial zwischen der Bremsstellung und der Lösestellung verstellt werden. An einem Kragen 43 der Distanzhülse 39 stützt sich dabei das als Wellenfederpacket gebildete Rückstellelement 20 ab, das auf die Bremshülse 19 einwirkt und auf diese eine in Richtung des Bremsrings 38 gerichtete Kraft ausübt. Die Schrägflächen 40 der Gegennocken 28 der Bremshülse 19 kontaktieren die Schrägflächen 40 der Steuernocken 26 des Freilaufinnenrings 14, so dass eine Relativdrehung zwischen dem Freilaufinnenring 14, der an dem Gehäuse 5 drehbar gelagert ist, und der Bremshülse 19 zu einer axialen Verstellung der Bremshülse relativ zu dem Freilaufinnenring 14 führt. In den Steuerkurven 13 des Freilaufinnenrings 14 sind die Schaltelemente 12 geführt, die dann durch die Durchbrüche 16 des den Freilaufinnenring 14 übergreifenden Schaltrings 15 hindurchgreifen, um in der ersten Schaltstellung mit der Innenwandung 33 des Axialabschnitts 32 des Kegelrades 23 einen Kraftschluss zu bilden.

### Bezugszeichenliste

- 1: Handwerkzeugmaschine
- 2: Getriebekopf
- 3: Antrieb
- 4: Elektromotor
- 5: Gehäuse
- 6: Abtrieb
- 7: Werkzeugwelle
- 8: Werkzeug
- 9: Schleifscheibe
- 10: Bremsvorrichtung
- 11: Schaltvorrichtung
- 12: Schaltmittel
- 13: Steuerkurve
- 14: Freilaufinnenring
- 15: Schaltring
- 16: Durchbruch
- 17: Überdeckungsabschnitt
- 18: Ringbund
- 19: Bremshülse
- 20: Rückstellelement
- 21: Getriebe
- 22: Kegeltrieb
- 23: Kegelrad
- 24: erster Sitz
- 25: zweiter Sitz
- 26: Steuernocke
- 27: Nockenmechanismus
- 28: Gegennocke
- 29: Verzahnung
- 30: Boden
- 31: Durchführung
- 32: Axialabschnitt
- 33: Innenwandung
- 34: Fläche
- 35: Kontaktfläche
- 36: Bremsfläche
- 37: Gegenfläche
- 38: Bremsring
- 39: Distanzhülse
- 40: Schrägfläche
- 41: Klemmschräge
- 42: Geradfläche
- 43: Kragen

## Patentansprüche

1. Getriebekopf (2) für eine Handwerkzeugmaschine (1) zum Bearbeiten von Werkstücken, mit einem Gehäuse (5), in dem ein mit einem Antrieb (3) einer Handwerkzeugmaschine (1) verbindbarer Abtrieb (6) aufgenommen ist, sowie mit einer Werkzeugwelle (7), an die ein Werkzeug (8) ankoppelbar ist, wobei zur Abbremsung der Werkzeugwelle (7) eine zwischen einer Bremsstellung und einer Lösestellung verstellbare und auf die Werkzeugwelle (7) wirkende Bremsvorrichtung (10) vorgesehen ist, wobei eine Schaltvorrichtung (11) vorgesehen ist, die zwischen einer ersten Schaltstellung, in der die Werkzeugwelle (7) mit dem Abtrieb (6) kraftübertragend verbunden ist und in der die Bremsvorrichtung (10) in die Lösestellung überführt wird, und einer zweiten Schaltstellung verstellbar ist, in der die Werkzeugwelle (7) von dem Abtrieb (6) entkoppelt ist und in der die Bremsvorrichtung (10) in die Bremsstellung überführt wird, **dadurch gekennzeichnet, dass** die Schaltvorrichtung (11) mindestens ein radial verstellbares Schaltmittel (12) umfasst, das in einer an einem Freilaufinnenring (14) ausgebildeten Steuerkurve (13) aufgenommen ist, die durch einen die erste Schaltstellung definierenden ersten Sitz (24) und einen die zweite Schaltstellung definierenden zweiten Sitz (25) begrenzt ist.

2. Getriebekopf (2) nach Anspruch 1, **dadurch gekennzeichnet, dass** die Schaltvorrichtung (11) derartig mit dem Abtrieb (6) wechselwirkt, dass die Schaltvorrichtung (11) durch einen von dem Abtrieb (6) induzierten mechanischen Schaltimpuls zwischen der ersten Schaltstellung und der zweiten Schaltstellung verstellbar ist.

3. Getriebekopf (2) nach Anspruch 1 oder 2, **dadurch gekennzeichnet, dass** das in dem ersten Sitz (24) befindliche Schaltmittel (12) in der ersten Schaltstellung kraftschlüssig mit dem Abtrieb (6) verbunden ist.

4. Getriebekopf (2) nach einem der Ansprüche 1 bis Anspruch 3, **dadurch gekennzeichnet, dass** die Schaltvorrichtung (11) einen Schaltring (15) umfasst, der den Freilaufinnenring (14) umgreift und der außenumfangsseitig mindestens einen eine Rückhaltefunktion für das mindestens eine Schaltmittel (12) bereitstellenden radialen Durchbruch (16) aufweist, durch den das mindestens eine Schaltmittel (12) in der ersten Schaltstellung radial durchtritt.

5. Getriebekopf (2) nach Anspruch 4, **dadurch gekennzeichnet, dass** dem Schaltring (15) ein radial nach innen weisender Überdeckungsabschnitt (17) zugeordnet ist, der besonders bevorzugt als ein Ringbund (18) gebildet ist.

6. Getriebekopf (2) nach einem der Ansprüche 1 bis 5, **dadurch gekennzeichnet, dass** die Bremsvorrichtung (10) eine drehfest mit der Werkzeugwelle (7) verbundene und relativ zu der Werkzeugwelle (7) axial zwischen der Lösestellung und der Bremsstellung verstellbare Bremshülse (19) umfasst.

7. Getriebekopf (2) nach Anspruch 6, **dadurch gekennzeichnet, dass** ein Rückstellelement (20) vorgesehen ist, das in der Lösestellung der Bremsvorrichtung (10) eine Rückstellkraft auf die Bremshülse (19) ausübt.

8. Getriebekopf (2) nach einem der Ansprüche 1 bis 7, **dadurch gekennzeichnet, dass** die Schaltvorrichtung (11) einen Nockenmechanismus (27) aufweist zur Verstellung der Bremsvorrichtung (10) zwischen der Lösestellung und der Bremsstellung.

9. Getriebekopf (2) nach Anspruch 8, **dadurch gekennzeichnet, dass** der Nockenmechanismus (27) mindestens einen an dem Freilaufinnenring (14) ausgebildeten axialen Steuernocken (26) umfasst zur Wechselwirkung mit einem an der Bremshülse (19) ausgebildeten Gegennocken (28).

10. Getriebekopf (2) nach einem der Ansprüche 6 bis 9, **dadurch gekennzeichnet, dass** die Bremsvorrichtung (10) eine dem Gehäuse (5) zugeordnete Bremsfläche (36) und eine der Bremshülse (19) zugeordnete Gegenfläche (37) zur Wechselwirkung mit der Bremsfläche (36) aufweist.

11. Getriebekopf (2) nach Anspruch 10, **dadurch gekennzeichnet, dass** die Bremsfläche (36) auf einem Bremsring (38) ausgebildet ist, der drehfest mit dem Gehäuse (5) verbunden ist.

12. Getriebekopf (2) nach einem der Ansprüche 6 bis 11, **dadurch gekennzeichnet, dass** eine eine axiale Führung für die Bremshülse (19) bereitstellende Distanzhülse (39) vorgesehen ist, die drehfest und axial unverschiebbar mit der Werkzeugwelle (7) verbunden ist.

13. Getriebekopf (2) nach einem der Ansprüche 1 bis 12, **dadurch gekennzeichnet, dass** der Abtrieb (6) ein einen Kegeltrieb (22) und ein Kegelrad (23) aufweisendes Getriebe (21) umfasst.

14. Getriebekopf nach einem der Ansprüche 1 bis 13, **dadurch gekennzeichnet, dass** das Verhältnis des Massenträgheitsmoments der gebremsten Masse zu dem Massenträgheitsmoment der ungebremsten Masse größer ist als 0,8:1, besonders bevorzugt größer ist als 1:1 und kleiner als 10:1 ist.

15. Handwerkzeugmaschine (1) mit einem Antrieb (3) sowie mit einem Getriebekopf (2) nach einem der Ansprüche 1 bis 14.

## Claims

1. A gear head (2) for a hand-held machine tool (1) for machining workpieces, wherein the gear head (2) comprises a housing (5) in which an output (6) is accommodated, which can be connected to a drive (3) of a hand-held machine tool (1), as well as a tool shaft (7), to which a tool (8) can be coupled, wherein, for braking the tool shaft (7), a braking device (10) is provided which can be moved between a braking position and a release position and which acts on the tool shaft (7), wherein a switching device (11) is provided which can be switched between a first switching position in which the tool shaft (7) is connected to the output (6) in a power transmitting manner and in which the braking device (10) is transferred into the release position, and a second switching position in which the tool shaft (7) is decoupled from the output (6) and in which the braking device (10) is transferred into the braking position, **characterised in that** the switching device (11) comprises at least one radially movable switching means (12) which is received by a control cam (13) which is formed on a freewheel inner ring (14) and which is delimited by a first seat (24) which defines the first switching position and a second seat (25) which defines the second switching position.

2. The gear head (2) according to claim 1, **characterised in that** the switching device (11) interacts with the output (6) in such a way that the switching device (11) can be moved between the first switching position and the second switching position by a mechanical switching pulse induced by the output (6).

3. The gear head (2) according to claim 1 or 2, **characterised in that**, when the switching means (12) is located in the first seat (24), it is frictionally connected to the output (6) in the first switching position.

4. The gear head (2) according to any one of the claims 1 to claim 3, **characterised in that** the switching device (11) comprises a switching ring (15) which engages around the freewheel inner ring (14) and which has, on an outer circumferential side, at least one radial opening (16) which provides a retaining function for the at least one switching means (12) and through which the at least one switching means (12) passes radially in the first switching position.

5. The gear head (2) according to claim 4, **characterized in that** a cover portion (17) which points in a radially inward direction is associated with the switching ring (15) and which, in a particularly preferred variant, is formed as an annular collar (18).

6. The gear head (2) according to any one of the claims 1 to 5, **characterised in that** the braking device (10) comprises a brake sleeve (19) which is connected to the tool shaft (7) in a rotationally fixed manner and which can be moved axially with respect to the tool shaft (7) between the release position and the braking position.

7. The gear head (2) according to claim 6, **characterised in that** a return element (20) is provided which exerts a restoring force on the brake sleeve (19) in the release position of the brake device (10).

8. The gear head (2) according to any one of the claims 1 to 7, **characterised in that** the switching device (11) comprises a cam mechanism (27) in order to move the braking device (10) between the release position and the braking position.

9. The gear head (2) according to claim 8, **characterised in that** the cam mechanism (27) comprises at least one axial drive cam (26) which is formed on the freewheel inner ring (14), for interacting with a mating cam (28) which is formed on the brake sleeve (19).

10. The gear head (2) according to any one of the claims 6 to 9, **characterised in that** the braking device (10) comprises a braking surface (36) which is associated with the housing (5) and an opposite surface (37) which is associated with the brake sleeve (19), for interaction with the braking surface (36).

11. The gear head (2) according to claim 10, **characterised in that** the braking surface (36) is formed on a brake ring (38) which is connected to the housing (5) in a rotationally fixed manner.

12. The gear head (2) according to any one of the claims 6 to 11, **characterised in that** a spacer sleeve (39) providing an axial guide for the brake sleeve (19) is provided, which is connected to the tool shaft (7) in a rotationally fixed manner and such that it cannot be moved axially.

13. The gear head (2) according to any one of the claims 1 to 12, **characterised in that** the output (6) comprises a transmission (21) which comprises a bevel gear drive (22) and a bevel gear (23).

14. The gear head according to any one of the claims 1 to 13, **characterised in that** the ratio of the mass moment of inertia of the braked mass to the mass moment of inertia of the unbraked mass is greater than 0.8 : 1, particularly preferably greater than 1 : 1 and less than 10 : 1.

15. A hand-held machine tool (1) comprising a drive (3) as well as a gear head (2) according to any one of the claims 1 to 14.

## Revendications

1. Tête de transmission (2) pour une machine-outil manuelle (1) pour usiner des pièces, avec un boîtier (5), dans lequel est logé un entraînement de sortie (6) pouvant être relié à un entraînement (3) d'une machine-outil manuelle (1), ainsi qu'avec un arbre d'outil (7), auquel peut être accouplé un outil (8), dans laquelle un dispositif de freinage (10) pouvant être ajusté entre une position de freinage et une position de libération et agissant sur l'arbre d'outil (7), est prévu pour ralentir l'arbre d'outil (7), dans laquelle est prévu un dispositif de commutation (11), qui peut être ajusté entre une première position de commutation, dans laquelle l'arbre d'outil (7) est relié par transmission de force à l'entraînement de sortie (6) et dans laquelle le dispositif de freinage (10) est transféré dans la position de libération, et une deuxième position de commutation, dans laquelle l'arbre d'outil (7) est découplé de l'entraînement de sortie (6) et dans laquelle le dispositif de freinage (10) est transféré dans la position de freinage, **caractérisée en ce que** le dispositif de commutation (11) comprend au moins un moyen de commutation (12) pouvant être ajusté radialement, qui est logé dans une came de commande (13) réalisée au niveau d'une bague intérieure à roue libre (14), qui est délimitée par un premier siège (24) définissant la première position de commutation et un deuxième siège (25) définissant la deuxième position de commutation.

2. Tête de transmission (2) selon la revendication 1, **caractérisée en ce que** le dispositif de commutation (11) interagit de telle manière avec l'entraînement de sortie (6) que le dispositif de commutation (11) peut être ajusté entre la première position de commutation et la deuxième position de commutation par une impulsion de commutation mécanique induite par l'entraînement de sortie (6).

3. Tête de transmission (2) selon la revendication 1 ou 2, **caractérisée en ce que** des moyens de commutation (12) se trouvant dans le premier siège (24) sont reliés dans la première position de commutation à force à l'entraînement de sortie (6).

4. Tête de transmission (2) selon l'une quelconque des revendications 1 à 3, **caractérisée en ce que** le dispositif de commutation (11) comprend une bague de commutation (15), qui entoure la bague intérieure à roue libre (14) et qui présente côté périphérique extérieur au moins un ajour (16) radial offrant une fonction de retenue pour l'au moins un moyen de commutation (12), que l'au moins un moyen de commutation (12) traverse de manière radiale dans la première position de commutation.

5. Tête de transmission (2) selon la revendication 4, **caractérisée en ce qu'**est associée à la bague de commutation (15) une section de recouvrement (17) pointant radialement vers l'intérieur, qui est formée de manière particulièrement préférée en tant qu'un collet annulaire (18) .

6. Tête de transmission (2) selon l'une quelconque des revendications 1 à 5, **caractérisée en ce que** le dispositif de freinage (10) comprend une douille de freinage (19) reliée de manière solidaire en rotation à l'arbre d'outil (7) et pouvant être ajustée de manière relative par rapport à l'arbre d'outil (7) de manière axiale entre la position de libération et la position de freinage.

7. Tête de transmission (2) selon la revendication 6, **caractérisée en ce qu'**est prévu un élément de rappel (20), qui exerce une force de rappel sur la douille de freinage (19) dans la position de libération du dispositif de freinage (10).

8. Tête de transmission (2) selon l'une quelconque des revendications 1 à 7, **caractérisée en ce que** le dispositif de commutation (11) présente un mécanisme à cames (27) pour ajuster le dispositif de freinage (10) entre la position de libération et la position de freinage.

9. Tête de transmission (2) selon la revendication 8, **caractérisée en ce que** le mécanisme à cames (27) comprend au moins une came de commande (26) axiale réalisée au niveau de la bague intérieure à roue libre (14), destinée à interagir avec une came antagoniste (28) réalisée au niveau de la douille de freinage (19).

10. Tête de transmission (2) selon l'une quelconque des revendications 6 à 9, **caractérisée en ce que** le dispositif de freinage (10) présente une surface de freinage (36) associée au boîtier (5) et une surface antagoniste (37) associée à la douille de freinage (19), destinée à interagir avec la surface de freinage (36).

11. Tête de transmission (2) selon la revendication 10, **caractérisée en ce que** la surface de freinage (36) est réalisée sur une bague de freinage (38), qui est reliée de manière solidaire en rotation au boîtier (5).

12. Tête de transmission (2) selon l'une quelconque des revendications 6 à 11, **caractérisée en ce qu'**est prévue une douille d'écartement (39) offrant un guidage axial pour la douille de freinage (19), laquelle est reliée de manière solidaire en rotation et sans pouvoir coulisser axialement à l'arbre d'outil (7).

13. Tête de transmission (2) selon l'une quelconque des revendications 1 à 12, **caractérisée en ce que** l'entraînement en sortie (6) comprend une transmission (21) présentant un train d'engrenages coniques (22) et une roue conique (23).

14. Tête de transmission selon l'une quelconque des revendications 1 à 13, **caractérisée en ce que** le rapport du couple d'inertie de masse de la masse freinée par rapport au couple d'inertie de masse de la masse non freinée est supérieur à 0,8:1, de manière particulièrement préférée est supérieur à 1:1 et est inférieur à 10:1.

15. Machine-outil manuelle (1) avec un entraînement (3) ainsi qu'avec une tête de transmission (2) selon l'une quelconque des revendications 1 à 14.
